# EUROPÄISCHE PATENTSCHRIFT

(11) **EP 1 663 573 B1**
(45) Veröffentlichungstag und Bekanntmachung des Hinweises auf die Patenterteilung: **06.06.2007**
(21) Anmeldenummer: 04765520.4
(22) Anmeldetag: 23.09.2004
(51) Int. Cl.: B24B 19/04, B24B 3/02, B24B 3/24, B24B 49/00

(54) **SCHLEIFMASCHINE MIT RUNDLAUFKORREKTUR**
GRINDING MACHINE WITH A CONCENTRICITY CORRECTION SYSTEM
AFFUTEUSE PRESENTANT UN SYSTEME DE CORRECTION DE CONCENTRICITE

(30) Priorität: 23.09.2003 DE 10344293
(43) Veröffentlichungstag der Anmeldung: 07.06.2006
(73) Patentinhaber: Walter Maschinenbau GmbH, 72072 Tübingen (DE)
(72) Erfinder: SIMAKOV, Mikail, Dr., Brighton, Victoria 3186 (AU); DILGER, Christian, 71254 Ditzingen (DE)
(74) Vertreter: Rüger, Barthelt & Abel Patentanwälte
(86) Internationale Anmeldenummer: PCT/EP2004/010660
(87) Internationale Veröffentlichungsnummer: WO 2005/030437

(56) Entgegenhaltungen:
- EP-A- 0 611 630
- WO-A-20/04052592
- DE-A- 19 753 426

## Beschreibung

Mit Schleifmaschinen, insbesondere Werkzeugschleifmaschinen, müssen heute hohe Genauigkeiten erzielt werden, was hohe Präzisionsanforderungen an alle beteiligten Maschinenelemente, insbesondere hinsichtlich der Lagerung und Führung des Werkstücks als auch hinsichtlich der Lagerung und Führung des Schleifkopfs erfordert. Ein erhebliches Problem stellen dabei ungenaue Spannfutter dar.

Werkzeugschleifmaschinen mit mehreren computergesteuerten Achsen sind bekannt. Dazu sei auf die EP-A-0611630 verwiesen, die eine Werkzeugmaschine offenbart. Sie weist einen in mehreren Raumrichtungen ("Achsen") computergesteuert bewegbaren Schleifkopf auf. Außerdem weist sie einen Werkstückhalter auf, der ebenfalls in mehreren Raumrichtungen (Achsen) gesteuert bewegbar ist. Diese Werkzeugmaschine dient beispielsweise zur Herstellung von Bohrwerkzeugen oder dergleichen.

Es ist bekannt, dass Werkstückspannfutter gelegentlich einen Taumelschlag aufweisen. Dazu offenbart die nachveröffentlichte WO 2004/052592 A1 (& EP 1 575 739 A1, Stand der Technik nach Art. 54 (3) EPÜ) ein drehbar gelagertes Spannfutter zur Aufnahme eines Werkstücks. An dem Spannfutter sind mehrere Justierschrauben vorgesehen, um das Werkstück vollkommen konzentrisch zu der Drehachse des Spannfutters ausrichten zu können.

Das Ausrichten eines Werkstücks in einem Spannfutter erfordert eine nicht unerhebliche Einstellzeit und stellt einen zusätzlichen Aufwand dar. Außerdem muss ein spezielles einstellbares Spannfutter verwendet werden.

Davon ausgehend ist es Aufgabe der Erfindung, eine Schleifmaschine, insbesondere eine Werkzeugschleifmaschine zu schaffen, mit der sich auf einfache und sichere Weise Werkzeuge mit hoher Rundlaufgenauigkeit erzeugen lassen.

Die Aufgabe wird gemäß Anspruch 1 und 8 mit einer Schleifmaschine gelöst, die die geforderte Schleifbearbeitung auf Basis eines von dem gespannten Werkstück festgelegten Koordinatensystems durchgeführt wird. Dies kann erfolgen, indem unmittelbar in Werkzeugkoordinaten gearbeitet wird oder, was bevorzugt wird, indem die Lage und Ausrichtung des Werkstückkoordinatensystems zunächst durch eine Messung bestimmt wird und indem dieses Werkstückkoordinatensystem dann durch eine kinematische Transformation auf das Maschinenkoordinatensystem umgerechnet wird. Zur kinematischen Transformation dient eine Transformationsmatrix, die sich aus der Ausrichtung des Werkstücks und seines Koordinatensystems innerhalb des Maschinenkoordinatensystems ergibt. Im Ergebnis nimmt die Maschinensteuereinrichtung auf eine nahezu beliebige Fehlausrichtung des Werkstücks im Maschinenkoordinatensystem Rücksicht. Zählen zu den Maschinenkoordinaten beispielsweise kartesische Koordinaten x, y, z, die eine Relativbewegung zwischen der Schleifscheibe und dem Werkstück charakterisieren, sowie ein oder mehrere Schwenkachsen, um die der Schleifkopf und/oder der Werkstückträger zu schwenken ist, kommt zu den Maschinenkoordinaten eine Aufnahmeachse der Werkstückaufnahme hinzu, die eine Drehung der Werkstückaufnahme um die Längsrichtung des zu spannenden Werkstücks beschreibt. Das Maschinenkoordinatensystem weist somit im allgemeinsten Fall sechs Freiheitsgrade, d.h. drei Linearachsen und zwei Schwenkachsen sowie eine Drehachse auf. Letztere wird durch die Aufnahmenachse gebildet.

Das Werkzeugkoordinatensystem ist beispielsweise ein kartesisches oder ein Polarkoordinatensystem. Dieses ist so gelegt, dass zumindest eine Achse die Symmetrieachse des vorzugsweise zylindrischen Rohlings bildet. Diese auch als Werkstückachse bezeichnete Koordinatenrichtung wird in einen ersten Messschritt bestimmt. Dies erfolgt im Maschinenkoordinatensystem durch eine geeignete Messeinrichtung, z.B. einer optischen Messeinrichtung oder eine mechanische Tasteinrichtung, die den zunächst in der Regel zylinderförmigen Rohling bei ein oder mehreren Umdrehungen der Werkstückaufnahme um die Aufnahmenachse an seiner Mantelfläche abtastet. Die vorhandene Taumelbewegung wird registriert. Aus der Bahn, die der Rohling vollführt, kann die Lage der Werkstückachse in Bezug auf die Aufnahmenachse berechnet werden. Die Aufnahmenachse und die Werkstückachse müssen einander nicht schneiden. Die Werkstückachse zu der Aufnahmenachse wird durch zwei Vektoren x,_₀, r,_₀ bestimmt. Die beiden Vektoren kennzeichnen die Exzentrizität und den Fluchtungsfehler beider Achsen zueinander.

Die Steuereinrichtung rechnet die Position des Rohlings unter Berücksichtigung dieser Vektoren in das Maschinenkoordinatensystem um und berücksichtigt dies bei der Ansteuerung entsprechender Stellmotoren, die den einzelnen Bewegungsrichtungen (Achsen) der Komponenten, d.h. des Schleifkopfs oder des Werkstückträgers der Schleifmaschine zugeordnet sind. Die Berücksichtigung kann in der Weise erfolgen, dass die vorhandenen und vorab bestimmten Befehle für die Aktionen der einzelnen Stellmotoren der einzelnen Achsen abgewandelt werden. Sie kann aber auch in der Weise geschehen, dass die Taumelbewegung des Werkstücks bei der Erzeugung der einzelnen Steuerbefehle für die Stellmotoren von vornherein berücksichtigt werden. Letzteres kann erfolgen, indem eine Transformationsvorschrift T, die die kinematische Transformation eines Punkts PW in dem Werkstückkoordinatensystem in einen Punkt PM des Maschinenkoordinatensystems umwandelt (PM = T (PW)) unter Berücksichtigung der Vektoren x,_₀, r,_₀ erstellt wird. Die neue Transformation Tneu (T, x,_₀, r,_₀) wird dann wiederum zur Umrechnung (Abbildung) eines Punktes des Werkstückkoordinatensystems PW in das Maschinenkoordinatensystem PM genutzt; PM = Tneu (PW). Es bleibt darauf hinzuweisen, dass die Vektoren x,_₀, r,_₀ von der Koordinate C des Maschinenkoordinatensystems abhängig ist, die eine Drehung der Aufnahme um die Aufnahmenachse beschreibt.

Die Bestimmung der Vektoren x,_₀, r,_₀ erfolgt vorzugsweise zu Beginn jeder Bearbeitung an dem noch unbearbeiteten Rohling. Es wird deshalb für jeden Bearbeitungsvorgang eine individuelle Transformationsvorschrift Tneu (T, x,_₀, r,_₀) erstellt. Damit können für die einzelnen Rohlinge unterschiedliche Spannfutter verwendet werden, auf deren Genauigkeit es nicht mehr ankommt. Auch mit sehr preisgünstigen Spannfuttern lassen sich somit hochpräzise bearbeitete Werkzeuge herstellen, deren geschliffene Schneidkanten und sonstigen Funktionsflächen zu der Werkzeugachse bestmöglich positioniert sind. Die Werkzeugachse wird durch den am Rohling vorgegebenen Werkzeugschaft festgelegt. Dieser kann zylindrisch oder auch kegelförmig sein. Der präzise Rundlauf in Präzisionsspannfuttern ist sicher gestellt, obwohl das Werkstück in einem möglicherweise wesentlich weniger präzisen Spannfutter geschliffen worden ist.

Weitere Einzelheiten vorteilhafter Ausführungsformen der Erfindung ergeben sich aus der Zeichnung, der Beschreibung und aus Ansprüchen. In der Zeichnung ist ein Ausführungsbeispiel der Erfindung veranschaulicht. Es zeigen:
- Figur 1: eine Werkzeugschleifmaschine in aufs Äußerste schematisierter Darstellung,
- Figur 2: den Werkzeughalter und den Schleifkopf in Draufsicht,
- Figur 3: den Werkzeughalter und einen gespannten Rohling während der anfänglichen Vermessung in schematisierter Darstellung,
- Figur 4: das Maschinenkoordinatensystem und die Position des Rohlings in diesem in schematisierter und überhöhter Darstellung und
- Figur 5: die Maschinensteuerung der Schleifmaschine nach Figur 1 als Blockschaltbild.

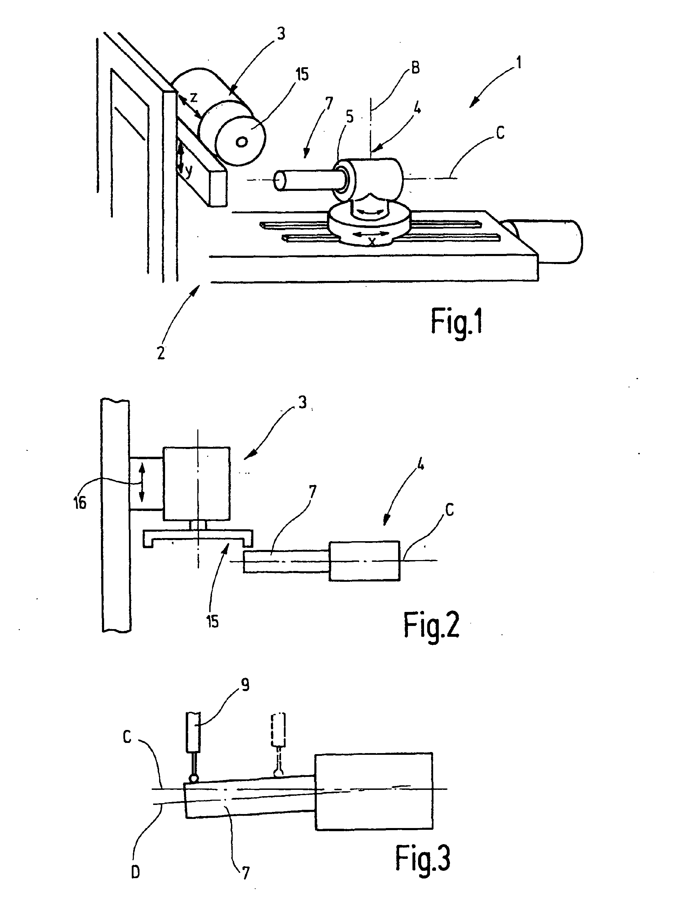

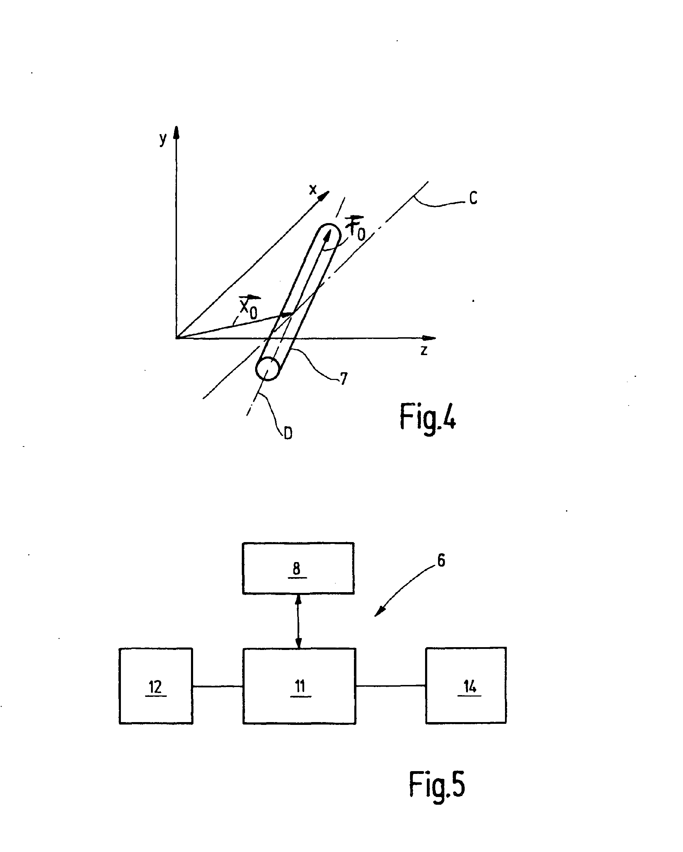

In Figur 1 ist eine Werkzeugschleifmaschine 1 in schematisierter Darstellung veranschaulicht. Zu ihr gehört ein Maschinengestell 2, das einen Schleifkopf 3 und einen Werkstückhalter 4 trägt. Wie in Figur 1 durch Pfeile schematisch angedeutet ist, sind der Werkstückhalter 4 und der Schleifkopf 3 in drei Koordinatenrichtungen X, Y und Z gegeneinander verstellbar. Die entsprechenden Führungen für die X-Richtung, die Y-Richtung und die Z-Richtung sowie die nicht weiter veranschaulichten Antriebe zur Bewegung des Werkstückhalters 4 oder des Schleifkopfs 3 in diesen Richtungen werden hier auch als "Achsen" oder als "CNC-Achsen" bezeichnet. Der Werkstückhalter 4 ist außerdem um eine Vertikalachse B schwenkbar gelagert. Außerdem weist der Werkstückhalter 4 eine Werkstückaufnahme 5 auf, die um eine Aufnahmenachse C drehbar ist. Die Bewegungen entlang aller Richtungen X, Y, Z und um die Achsen B und C werden von einer Maschinensteuereinrichtung 6 kontrolliert, d.h. gesteuert und/oder geregelt, wie sie in Figur 5 schematisch veranschaulicht ist.

Der Schleifkopf 3 dient dazu, aus einem in der Werkstückaufnahme 5 gehaltenen Rohling 7 das gewünschte Werkstück, beispielsweise einen Bohrer oder einen Fräser oder dergleichen herzustellen. Der Rohling 7 ist vorzugsweise ein zylindrischer Körper. Dieser ist, wie Figur 3 veranschaulicht, von der Werkstückaufnahme 5 in der Regel nicht vollständig koaxial zu der Aufnahmenachse C gespannt. Vielmehr weicht die Symmetrieachse des zylindrischen Rohlings 7, d.h. die Werkstückachse D von der Aufnahmenachse C ab. Die Abweichung ist in der Regel stochastisch und umso größer je geringer die Genauigkeit der Werkstückaufnahme 5 ist. Die Aufnahmenachse C und die Werkstückachse D müssen einander nicht einmal schneiden, d.h. sie können zueinander windschief angeordnet sein. Bei einer Drehung des Rohlings 7 um die Aufnahmenachse C vollführt der Rohling 7 eine Taumelbewegung.

Die Maschinensteuereinrichtung 6 weist ein Messmodul 8 auf, zu dem ein oder mehrere Messtaster 9 (Figur 3) oder andere Messmittel gehören, die die Position des Rohlings 7 erfassen können. Werden Taster 9 angewendet dienen diese beispielsweise dazu, bei ein oder mehreren Umdrehungen des Rohlings 7 diesem am Außenumfang, d.h. an seiner Mantelfläche z.B. punktweise anzutasten. Beispielsweise ist es möglich, einen Rohling an drei oder mehreren Punkten seines Umfangs anzutasten, indem er von Tastvorgang zu Tastvorgang jeweils um einen festgelegten Winkelbetrag um die Aufnahmenachse C gedreht und dann wieder angetastet wird. Erfolgt der Tastvorgang.über mehrere Drehungen hinweg können auch periodische Fehler, deren Periode über mehrere Umdrehungen des Rohlings geht, und die z.B. aus dem Antriebsgetriebe oder von Kugellagern herrühren, erfasst werden. Zu dem Messmodul 8 gehört außerdem ein Auswerteprogramm, das aus den gewonnenen Messpunkten auf die Lage der Werkstückachse D schließt. Die Tastvorgänge können, wie in Figur 3 gestrichelt angedeutet ist, an mehreren bezüglich der Aufnahmenachse C axial voneinander beabstandeten Stellen durchgeführt werden.

Das Messmodul 8 dient weiter dazu, aus den gewonnenen Messwerten auf die Exzentrizität und den Fluchtungsfehler zu schließen, mit dem der Rohling 7 in Bezug auf die Aufnahmenachse C gehalten ist. Die Exzentrizität und der Fluchtungsfehler können durch Vektoren x̅₀, r̅₀ beschrieben werden, wie sie in Figur 4 stark überhöht veranschaulicht sind. Der Rohling 7 ist zu der Aufnahmenachse C windschief eingestellt. Rundlauffehler wird durch einen Richtungsvektor r̅₀, der parallel zu der Mittelachse des Rohlings 7 oder eines anderweitigen Werkstücks liegt und einen weiteren Vektor x̅₀ beschrieben, der den Versatz des Werkstücks von der idealen Position beschreibt. Die von dem Messmodul 8 ermittelten Vektoren x̅₀, r̅₀ werden an ein Rechenmodul 11 übergeben, mit dem die Koordinaten des Werkstücks oder Rohlings 7 aus einem werkstückbezogenen Koordinatensystem in das Maschinenkoordinatensystem X, Y, Z, B, C umgerechnet wird. Zusätzlich zu der üblichen Transformation T, mit der ein in dem Werkstückkoordinatensystem gegebener Punkt PW in ein Maschinenkoordinatensystem PM umzurechnen ist, wenn keine Taumelbewegung vorliegt, d.h. wenn der Vektor r̅₀ die gleiche Richtung aufweist wie die Aufnahmenachse C und wenn der Vektor x̅₀ verschwindet (0 ist) berücksichtigt die Transformation Tneu nun noch die Vektoren x̅₀, r̅₀ (Tneu (T, x̅₀, r̅₀)). Das Rechenmodul, das durch ein in der Maschinensteuereinrichtung 6 laufendes Programm gebildet sein kann, erhält von einem Steuermodul 12 Daten oder Befehle, die als Stellbefehle für die einzelnen, den Achsen X, Y, Z, B und C zugeordneten Antriebsmotoren angesehen werden können. Diese Stellbefehle werden durch das Rechenmodul 11 abgewandelt und als korrigierte Stellbefehle an die Antriebe 14 weitergegeben.

Die insoweit beschriebene Werkzeugschleifmaschine arbeitet wie folgt:
Zum Bearbeiten eines Werkstücks, d.h. zur Herstellung eines Werkzeugs aus einem Rohling 7, wird zunächst der Rohling 7 in die Werkstückaufnahme 5 gespannt und in dieser vermessen. Dazu steuert das Rechenmodul 11 zunächst den entsprechenden Antrieb des Werkstückhalters 4 an, so dass der Rohling 7 in Schritten um die Aufnahmenachse C gedreht wird. Der Taster 9, der mit dem Schleifkopf 3 verbunden sein kann oder anderweitig geführt wird, tastet die Mantelfläche des Rohlings 7 an verschiedenen Stellen in gleicher Axialposition an und liefert die entsprechenden Messwerte an das Rechenmodul 11. Nach zumindest einem vorzugsweise aber mehreren Umläufen des Rohlings 7 wird der Taster 9 axial verstellt, um den Rohling 7 wiederum entlang seines Umfangs abzutasten. Dazu lässt das Rechenmodul 11 den Rohling 7 wieder schrittweise drehen. Bedarfsweise kann der Rohling 7 an weiteren Stellen angetastet werden.

Sind die zumindest beiden axial beabstandeten ringförmigen Bereiche des Rohlings 7 abgetastet errechnet das Messmodul 8 oder das Rechenmodul 9 daraus die Vektoren x̅₀, r̅₀, die die Exzentrizität und die Fehlausrichtung des Rohlings 7 kennzeichnen. Die beiden Vektoren x̅₀, r̅₀ werden dann individuell für das eben vermessene Werkstück bzw. den Rohling 7 bereit gehalten und zur Transformation der werkstückbezogenen Koordinaten in die maschinenbezogenen Koordinaten weiter verwendet.

Soll nun der Rohling 7 in einem Schleifbearbeitungsvorgang bearbeitet werden, wie er in Figur 2 angedeutet ist, und soll beispielsweise eine zylindrische Fläche erzeugt werden, wird der Schleifkopf 3 gemäß Figur 2 an den Rohling 7 herangefahren. Zur Erzeugung der zylindrischen Fläche wird der Rohling 7 um die Aufnahmenachse C gedreht während die Schleifscheibe 15 mit ihm in Eingriff ist. Der Taumelschlag des Rohlings 7 ist in dem vorherigen Messvorgang bestimmt und von der Maschinensteuereinrichtung 6 abgespeichert worden. Diese berücksichtigt den Taumelschlag nun bei der Ansteuerung des Schleifkopfs 3, so dass dieser gemäß dem in Figur 2 veranschaulichten Pfeil 16 eine hin- und hergehende Bewegung ausführt. Die Bewegung ist dabei so abgestimmt, dass der von der Berührungsstelle zwischen der Schleifscheibe 15 und dem Umfang des Rohlings 7 beschriebene Kreis an dem Rohling 7 konzentrisch zu dessen Werkstückachse D liegt. Es gelingt deshalb unabhängig von Spannungenauigkeiten der Werkstückaufnahme 15, zylindrische Flächen an dem Rohling 7 zu erzeugen, die bezüglich der Werkstückachse D konzentrisch und maßhaltig sind.

Andere Flächen, wie Freiflächen, Spanflächen sowie Schneidkanten können ebenfalls symmetrisch und in Bezug auf die Lage zur Werkstückachse D präzise erzeugt werden.

Eine Werkzeugschleifmaschine 1 weist eine Maschinensteuereinrichtung 6 auf, die mittels einer geeigneten Messeinrichtung, die z.B. aus einem Taster 9 und einem Messmodul 8 besteht, zunächst den Taumelschlag eines Rohlings 7 in Bezug auf die ideale Aufnahmenachse C einer Werkstückaufnahme bestimmt. Bei der Schleifbearbeitung des Rohlings 7 bzw. eines werkstücks wird dieser Taumelschlag berücksichtigt und kompensiert, d.h. die Schleifwerkzeuge werden einem taumelnden Werkstück so nachgeführt, dass das Werkstück maßhaltig und konzentrisch bearbeitet wird.

## Patentansprüche

1. Schleifmaschine (1), insbesondere Werkzeugschleifmaschine,
mit einer Werkstückaufnahme (5), die zur Aufnahme eines länglichen rotationssymmetrischen Rohlings (7) oder eines Werkstücks (7) eingerichtet ist,
mit einer Drehpositioniereinrichtung, die dazu eingerichtet ist, die Werkstückaufnahme (5) um eine vorgegebene Aufnahmenachse (C) zu drehen, und mit einer Drehpositionserfassungseinrichtung, die mit der Werkstückaufnahme (5) verbunden sind,
mit einem Schleifkopf (3), der eine Drehantriebseinrichtung aufweist und wenigstens ein Schleifwerkzeug (15) trägt,
mit einer Positioniereinrichtung (14), die mit der Werkstückaufnahme (5) und/oder dem Schleifkopf (3) verbunden ist, um eine Relativbewegung zwischen dem Schleifwerkzeug (15) und dem Rohling (7) oder dem Werkstück (7) zu bewirken,
mit einer Messeinrichtung (8, 9), die dazu eingerichtet ist, die Exzentrizität und den Fluchtungsfehler des Rohlings (7) oder Werkstücks (7) in Bezug auf die Aufnahmenachse (C) zu bestimmen,
mit einer Maschinensteuereinrichtung (6), die mit der Drehpositioniereinrichtung, mit der Drehpositionserfassungseinrichtung, mit der Positioniereinrichtung (14) und mit der Messeinrichtung (8, 9) verbunden ist und die ein Rechenmodul (11) aufweist, das Stellbefehle für die Positioniereinrichtung (14) unter Berücksichtigung des Fluchtungsfehlers und der Exzentrizität bestimmt, um die Schleifwerkzeuge (15) einem taumelnden Werkstück (7) so nachzuführen, dass das Werkstück maßhaltig und konzentrisch bearbeitet wird.

2. Schleifmaschine nach Anspruch 1, **dadurch gekennzeichnet, dass** die Messeinrichtung (8, 9) wenigstens einen Messtaster (9) umfasst, mit dem der Rohling (7) oder das Werkstück (7) an mehreren voneinander in Axialrichtung beabstandeten Stellen angetastet wird.

3. Schleifmaschine nach Anspruch 1, **dadurch gekennzeichnet, dass** die Messeinrichtung (8, 9) wenigstens einen Messtaster (9) umfasst, mit dem der Rohling (7) oder das Werkstück (7) an mehreren voneinander in Umfangsrichtung beabstandeten Stellen angetastet wird.

4. Schleifmaschine nach Anspruch 1, **dadurch gekennzeichnet, dass** zur Messung der Exzentrizität und des Fluchtungsfehlers des Rohlings oder des Werkstücks (7) dieses schrittweise gedreht und dabei zunächst in einer ersten Axialposition und dann in zumindest einer anderen Axialposition angetastet wird.

5. Schleifmaschine nach Anspruch 1, **dadurch gekennzeichnet, dass** das Rechenmodul (11) aus den gewonnenen Messwerten zwei Vektoren (x,_₀, r,_₀) bestimmt, die die Ablage der Werkstückachse (D) von der Aufnahmenachse (C) und die Ausrichtung der Werkstückachse (D) in Bezug auf die Aufnahmenachse (C) kennzeichnen.

6. Schleifmaschine nach Anspruch 5, **dadurch gekennzeichnet, dass** das Rechenmodul die Werkstückkoordinaten im Wege einer Koordinatentransformation in Maschinenkoordinaten umrechnet und bei dieser Transformation die Vektoren (x,_₀, r,_₀) berücksichtigt.

7. Schleifmaschine nach Anspruch 1, **dadurch gekennzeichnet, dass** die Bestimmung der Exzentrizität und des Fluchtungsfehlers anhand der Bestimmung der Vektoren nach jedem Spannvorgang durchgeführt wird, bei dem ein Werkstück oder ein Rohling (7) in der Werkstückaufnahme (5) gespannt worden ist.

8. Verfahren zum Steuern einer Schleifmaschine, insbesondere einer Werkzeugschleifmaschine (1),
mit einer Werkstückaufnahme (5), die zur Aufnahme eines länglichen rotationssymmetrischen Rohlings (7) oder eines Werkstücks (7) eingerichtet ist,
mit einer Drehpositioniereinrichtung, die dazu eingerichtet ist, die Werkstückaufnahme (5) um eine vorgegebene Aufnahmenachse (C) zu drehen, und mit einer Drehpositionserfassungseinrichtung, die mit der Werkstückaufnahme (5) verbunden sind,
mit einem Schleifkopf (3), der eine Drehantriebseinrichtung aufweist und wenigstens ein Schleifwerkzeug (15) trägt,
mit einer Positioniereinrichtung, die mit der Werkstückaufnahme (5) und/oder dem Schleifkopf (3) verbunden ist, um eine Relativbewegung zwischen dem Schleifwerkzeug (15) und dem Rohling (7) oder dem Werkstück (7) zu bewirken,
mit einer Messeinrichtung (8, 9), die dazu eingerichtet ist, die Exzentrizität und den Fluchtungsfehler des Rohlings (7) oder Werkstücks (7) in Bezug auf die Aufnahmenachse (C) zu bestimmen,
mit einer Maschinensteuereinrichtung (6), die mit der Drehpositioniereinrichtung, mit der Drehpositionserfassungseinrichtung, mit der Positioniereinrichtung und mit der Messeinrichtung verbunden ist und die ein Rechenmodul (11) aufweist, das Stellbefehle für die Positioniereinrichtung (14) unter Berücksichtigung des Fluchtungsfehlers und der Exzentrizität bestimmt, um die Schleifwerkzeuge (15) einem taumelnden Werkstück (7) so nachzuführen, dass das Werkstück (7) maßhaltig und konzentrisch bearbeitet wird.

9. Verfahren nach Anspruch 8, **dadurch gekennzeichnet, dass** die Messeinrichtung wenigstens einen Messtaster umfasst, mit dem das Werkstück oder der Rohling an mehreren voneinander in Axialrichtung beabstandeten Stellen angetastet wird.

10. Verfahren nach Anspruch 8, **dadurch gekennzeichnet, dass** die Messeinrichtung wenigstens einen Messtaster umfasst, mit dem das Werkstück oder der Rohling an mehreren voneinander in Umfangsrichtung beabstandeten Stellen angetastet wird.

11. Verfahren nach Anspruch 8, **dadurch gekennzeichnet, dass** zur Messung der Exzentrizität und des Fluchtungsfehlers des Werkstücks dieses schrittweise gedreht und dabei zunächst in einer ersten Axialposition und dann in zumindest einer anderen Axialposition angetastet wird.

12. Verfahren nach Anspruch 8, **dadurch gekennzeichnet, dass** das mittels des Rechenmoduls aus den gewonnenen Messwerten zwei Vektoren (x,_₀, r,_₀) bestimmt werden, die die Ablage der Werkstückachse von der Aufnahmenachse und die Ausrichtung der Werkstückachse in Bezug auf die Aufnahmenachse kennzeichnen.

13. Verfahren nach Anspruch 13, **dadurch gekennzeichnet, dass** das Rechenmodul die Werkstückkoordinaten im Wege einer Koordinatentransformation in Maschinenkoordinaten umrechnet und bei dieser Transformation die Vektoren (x,__{0,} r,_₀) berücksichtigt.

14. Verfahren nach Anspruch 8, **dadurch gekennzeichnet, dass** die Bestimmung der Exzentrizität und des Fluchtungsfehlers anhand der Bestimmung der Vektoren nach jedem Spannvorgang durchgeführt wird, bei dem ein Werkstück oder ein Rohling in der Werkstückaufnahmeeinrichtung gespannt worden ist.

## Claims

1. Grinding machine (1), in particular a tool grinding machine,
with a workpiece holder (5), which is fitted to receive an elongated rotationally symmetric blank (7) or a workpiece (7),
with a rotational positioning means, which is fitted to rotate the workpiece holder (5) around a given holder axis (C), and with a rotational position detection means, which are connected to the workpiece holder (5),
with a grinding head (3), which has a rotary drive means and carries at least one grinding tool (15),
with a positioning means (14), which is connected to the workpiece holder (5) and/or the grinding head (3), in order to cause a relative movement between the grinding tool (15) and the blank (7) or the workpiece (7),
with a measuring means (8, 9), which is fitted to determine the eccentricity and alignment error of the blank (7) or workpiece (7) relative to the holder axis (C),
with a machine control means (6), which is connected to the rotational positioning means, the rotational position detection means, the positioning means (14) and the measuring means (8, 9), and which has an arithmetic module (11), which determines actuating commands for the positioning means (14) taking into consideration the alignment error and the eccentricity in order to cause the grinding tools (15) to track an unsteady workpiece (7) so that the workpiece is machined concentrically and to the correct dimension.

2. Grinding machine according to Claim 1, **characterised in that** the measuring means (8, 9) comprises as least one measurement probe (9), with which the blank (7) or the workpiece (7) is scanned at several locations spaced from one another in axial direction.

3. Grinding machine according to Claim 1, **characterised in that** the measuring means (8, 9) comprises as least one measurement probe (9), with which the blank (7) or the workpiece (7) is scanned at several locations spaced from one another in peripheral direction.

4. Grinding machine according to Claim 1, **characterised in that** to measure the eccentricity and the alignment error of the blank or the workpiece (%), this is rotated step by step and during this is scanned firstly in a first axial position and then in at least one other axial position.

5. Grinding machine according to Claim 1, **characterised in that** from the obtained measured values the arithmetic module (11) determines two vectors (x,_₀, r,_₀), which identify the deviation of the workpiece axis (D) from the holder axis (C) and the alignment of the workpiece axis (D) relative to the holder axis (C).

6. Grinding machine according to Claim 5, **characterised in that** the arithmetic module converts the workpiece coordinates by way of a coordinate transformation into machine coordinates and takes the vectors (x,_₀, r,_₀) into consideration during this transformation.

7. Grinding machine according to Claim 1, **characterised in that** the determination of the eccentricity and the alignment error is conducted on the basis of the determination of the vectors after each clamping process, during which a workpiece or a blank (7) has been clamped in the workpiece holder (5).

8. Method for controlling a grinding machine, in particular a tool grinding machine (1),
with a workpiece holder (5), which is fitted to receive an elongated rotationally symmetric blank (7) or a workpiece (7),
with a rotational positioning means, which is fitted to rotate the workpiece holder (5) around a given holder axis (C), and with a rotational position detection means, which are connected to the workpiece holder (5),
with a grinding head (3), which has a rotary drive means and carries at least one grinding tool (15),
with a positioning means, which is connected to the workpiece holder (5) and/or the grinding head (3), in order to cause a relative movement between the grinding tool (15) and the blank (7) or the workpiece (7),
with a measuring means (8, 9), which is fitted to determine the eccentricity and alignment error of the blank (7) or workpiece (7) relative to the holder axis (C),
with a machine control means (6), which is connected to the rotational positioning means, the rotational position detection means, the positioning means and the measuring means, and which has an arithmetic module (11), which determines actuating commands for the positioning means (14) taking into consideration the alignment error and the eccentricity in order to cause the grinding tools (15) to track an unsteady workpiece (7) so that the workpiece (7) is machined concentrically and to the correct dimension.

9. Method according to Claim 8, **characterised in that** the measuring means comprises as least one measurement probe, with which the workpiece or the blank is scanned at several locations spaced from one another in axial direction.

10. Method according to Claim 8, **characterised in that** the measuring means comprises as least one measurement probe, with which the workpiece or the blank is scanned at several locations spaced from one another in peripheral direction.

11. Method according to Claim 8, **characterised in that** to measure the eccentricity and the alignment error of the workpiece, this is rotated step by step and during this is scanned firstly in a first axial position and then in at least one other axial position.

12. Method according to Claim 8, **characterised in that** from the obtained measured values the arithmetic module determines two vectors (x,_₀, r,_₀), which identify the deviation of the workpiece axis from the holder axis and the alignment of the workpiece axis relative to the holder axis.

13. Method according to Claim 13?, **characterised in that** the arithmetic module converts the workpiece coordinates by way of a coordinate transformation into machine coordinates and takes the vectors (x,_₀, r,_₀) into consideration during this transformation.

14. Method according to Claim 8, **characterised in that** the determination of the eccentricity and the alignment error is conducted on the basis of the determination of the vectors after each clamping process, during which a workpiece or a blank has been clamped in the workpiece holder.

## Revendications

1. Affûteuse (1), en particulier affûteuse d'outil comprenant :
- un logement de pièce (5) conçu pour accueillir une ébauche (7) allongée de révolution ou une pièce (7),
- un dispositif de positionnement en rotation conçu pour faire tourner le logement de pièce (5) autour d'un axe de logement prédéfini (C), ainsi qu'un dispositif de détection de la position de rotation, qui est relié au logement de pièce (5),
- une tête d'affûtage (3) qui présente un dispositif d'entraînement en rotation et au moins un outil d'affûtage (15),
- un dispositif de positionnement (14) qui est relié au logement de pièce (5) et/ou à la tête d'affûtage (3) pour produire un déplacement relatif de l'outil d'affûtage (15) et de l'ébauche (7) ou de l'outil (7),
- un dispositif de mesure (8, 9) conçu pour déterminer l'excentricité et le défaut d'alignement de l'ébauche (7) ou de l'outil (7) par rapport à l'axe de logement (C),
- un dispositif de commande de machine (6), qui est relié au dispositif de positionnement en rotation, au dispositif de détection de la position de rotation, au dispositif de positionnement (14) et au dispositif de mesure (8, 9) et qui présente un module de calcul (11) définissant les ordres de déplacement pour le dispositif de positionnement (14), en prenant en considération le défaut d'alignement et d'excentricité, afin de faire suivre à l'outil d'affûtage (15) une pièce en nutation (7) de manière que celle-ci soit usinée concentriquement et selon des dimensions exactes.

2. Affûteuse selon la revendication 1, **caractérisée en ce que** le dispositif de mesure (8, 9) comprend au moins un palpeur de mesure (9) par lequel l'ébauche (7) ou la pièce (7) est explorée en plusieurs endroits séparés les uns des autres en direction axiale.

3. Affûteuse selon la revendication 1, **caractérisée en ce que** le dispositif de mesure (8, 9) comprend au moins un palpeur de mesure (9) par lequel l'ébauche (7) ou la pièce (7) est explorée en plusieurs endroits séparés les uns des autres en direction périphérique.

4. Affûteuse selon la revendication 1, **caractérisée en ce que** pour mesurer l'excentricité et le défaut d'alignement de l'ébauche ou de la pièce (7), celle-ci est tournée pas à pas et est explorée tout d'abord dans une première position axiale, puis dans au moins une autre position axiale.

5. Affûteuse selon la revendication 1, **caractérisée en ce que** le module de calcul (11) définit à partir des valeurs de mesure relevées, deux vecteurs *̅x̅*̅₀, *̅r̅*̅₀ qui caractérisent le déport de l'axe de pièce (D) par rapport à l'axe de logement (C) et la direction de l'axe de pièce (D) par rapport à l'axe de logement (C).

6. Affûteuse selon la revendication 5, **caractérisée en ce que** le module de calcul, au cours d'une transformation de calcul, convertit les coordonnées de pièce en coordonnées de machine, en tenant compte dans cette transformation des vecteurs *̅x̅*̅₀, *̅r̅*̅₀.

7. Affûteuse selon la revendication 1, **caractérisée en ce que** la détermination d'excentricité et le défaut d'alignement par l'intermédiaire de la détermination des vecteurs, est effectuée après chaque opération de serrage au cours de laquelle une pièce ou une ébauche (7) a été serrée dans le logement de pièce (5).

8. Procédé pour commander une affûteuse, notamment une affûteuse d'outil (1) qui comporte
- un logement de pièce (5) conçu pour accueillir une ébauche (7) allongée de révolution ou une pièce (7),
- un dispositif de positionnement en rotation conçu pour faire tourner le logement de pièce (5) autour d'un axe de logement prédéfini (C), ainsi qu'un dispositif de détection de la position de rotation qui est relié au logement de pièce (5),
- une tête d'affûtage (3) qui présente un dispositif d'entraînement en rotation et au moins un outil d'affûtage (15),
- un dispositif de positionnement (14) qui est relié au logement de pièce (5) et/ou à la tête d'affûtage (3) pour produire un déplacement relatif de l'outil d'affûtage (15) et de l'ébauche (7) ou de l'outil (7),
- un dispositif de mesure (8, 9) conçu pour déterminer l'excentricité et le défaut d'alignement de l'ébauche (7) ou de l'outil (7) par rapport à l'axe de logement (C),
- un dispositif de commande de machine (6), qui est relié au dispositif de positionnement en rotation, au dispositif de détection de la position de rotation, au dispositif de positionnement (14) et au dispositif de mesure (8, 9) et qui présente un module de calcul (11) définissant les ordres de déplacement pour le dispositif de positionnement (14), en prenant en considération le défaut d'alignement et d'excentricité, afin de faire suivre à l'outil d'affûtage (15) une pièce en nutation (7) de manière que celle-ci soit usinée concentriquement et selon des dimensions exactes.

9. Procédé selon la revendication 8, **caractérisé en ce que** le dispositif de mesure (8, 9) comprend au moins un palpeur de mesure (9) par lequel l'ébauche (7) ou la pièce (7) est explorée en plusieurs endroits séparés les uns des autres en direction axiale.

10. Procédé selon la revendication 8, **caractérisé en ce que** le dispositif de mesure (8, 9) comprend au moins un palpeur de mesure (9) par lequel l'ébauche (7) ou la pièce (7) est explorée en plusieurs endroits séparés les uns des autres en direction périphérique.

11. 1 Procédé selon la revendication 8, **caractérisé en ce que** pour mesurer l'excentricité et le défaut d'alignement de l'ébauche ou de la pièce (7), celle-ci est tournée pas à pas et est explorée tout d'abord dans une première position axiale, puis dans au moins une autre position axiale.

12. Procédé selon la revendication 8, **caractérisé en ce qu'**au moyen du module de calcul (11) sont définis à partir des valeurs de mesure relevées, deux vecteurs *̅x̅*̅₀, *̅r̅*̅₀ qui caractérisent la déviation de l'axe de pièce (D) par rapport à l'axe de logement (C) et la direction de l'axe de pièce (D) par rapport à l'axe de logement (C).

13. Procédé selon la revendication 8, **caractérisé en ce que** le module de calcul, au cours d'une transformation de calcul, convertit les coordonnées de pièce en coordonnées de machine, en tenant compte dans cette transformation des vecteurs *̅x̅*̅₀, *̅r̅*̅₀.

14. Procédé selon la revendication 8, **caractérisé en ce que** la détermination d'excentricité et le défaut d'alignement par l'intermédiaire de la détermination des vecteurs, est effectuée après chaque opération de serrage au cours de laquelle une pièce ou une ébauche (7) a été serrée dans le logement de pièce (5).
